Europäisches Patentamt

European Patent Office

Office européen des brevets

(19)

(11) **EP 1 278 997 B1**

(12) **EUROPEAN PATENT SPECIFICATION**

(45) Date of publication and mention
of the grant of the patent:
**26.10.2005 Bulletin 2005/43**

(21) Application number: **01911508.8**

(22) Date of filing: **22.01.2001**

(51) Int Cl.⁷: $G01B\ 1/00$

(86) International application number:
**PCT/EP2001/000663**

(87) International publication number:
**WO 2001/053773 (26.07.2001 Gazette 2001/30)**

(54) **METHOD AND SYSTEM FOR CALIBRATION OF AN ELECTRICAL LINEWIDTH MEASUREMENT AND WAFER FOR BEING USED IN THE METHOD**

**VERFAHREN UND SYSTEM ZUR KALIBRIERUNG EINER ELEKTRISCHEN MESSUNG DER LINIENBREITE UND IN DEM VERFAHREN GENUTZTER WAFER**

**PROCEDE D'ETALONNAGE D'UN SYSTEME ELECTRIQUE DE MESURE DE LARGEURS DE LIGNE, PLAQUE S'UTILISANT DANS CE PROCEDE, ET SYSTEME ELECTRIQUE D'ETALONNAGE DE MESURE DE LARGEURS DE LIGNE**

(84) Designated Contracting States:
**DE**

(30) Priority: **21.01.2000 US 177490 P**
**14.09.2000 US 232589 P**

(43) Date of publication of application:
**29.01.2003 Bulletin 2003/05**

(73) Proprietors:
• **Infineon Technologies AG**
**81669 München (DE)**
• **IMEC**
**3001 Heverlee-Leuven (BE)**

(72) Inventors:
• **SARSTEDT, Margit**
**60389 Frankfurt (DE)**
• **JONCKHEERE, Rik**
**B-2812 Muizen (BE)**
• **RANGELOV, Ventzeslav**
**34127 Kassel (DE)**

(74) Representative: **Viering, Jentschura & Partner**
**Steinsdorfstrasse 6**
**80538 München (DE)**

(56) References cited:
**US-A- 3 974 443**          **US-A- 5 485 080**
**US-A- 5 617 340**

Remarks:
The file contains technical information submitted after the application was filed and not included in this specification

**Description**

The invention relates to a method for calibration of an electrical linewidth measurement system, and to an electrical linewidth measurement calibration system.

To control and optimize lithographic processes as used in semiconductor technology, the real width of the structures on a wafer has to be determined in a statistical way. This process control also has to cover the influence of changes in geometry, e.g. changes in width, presence of corners etc., on the lithographic process.

Therefore, measurements are regularly performed on the defined structures. Defined means that a lithographic process, i.e. resist coating, exposure and development, is applied to delineate structures in a photosensitive material.

The width of these structures can be determined using several techniques, such as **A**tomic **F**orce **M**icroscopy (AFM), cross-sectional **S**canning **E**lectronic **M**icroscopy (X-SEM) or top-down **S**canning **E**lectronic **M**icroscopy (SEM).

However, these methods are time-consuming, which makes statistical process control very expensive or even not feasible. For X-SEM, the wafers have to be cleaved and are lost for further processing or re-use. These methods further require expensive tools for being performed.

A cheaper and faster measurement technique is required in order to be able to control the lithographic process in a more industrial way.

Therefore, the delineated structures are transferred into an underlying conductive layer using an etching technique. These patterned structures can be measured electrically, thereby determining their resistance.

Using Ohm's law the width of the measured structure can be extracted from its resistance value.

$$R = \frac{\rho \cdot L}{d} \cdot \frac{1}{W_m} = K \cdot \frac{1}{W_m},\qquad\qquad(1)$$

wherein

- R is a measured electrical resistance,
- L is a known, i.e. predetermined, length of the straight line structure,
- $W_m$ is an extracted width of the straight line structure, further also denoted as measured width,
- $\rho$ is a known, i.e. predetermined, resistivity of the patterned layer, i.e. the straight line structure, and
- d is the thickness of the patterned layer.

The width $W_m$ however extracted from the resistance value R differs from the real width M due to errors introduced for example by the electrical measurement set-up, the electrical measurement itself or by the patterning process.

In order to determine the offset S, with

$$2 \cdot S = M - W_m,\qquad\qquad(2)$$

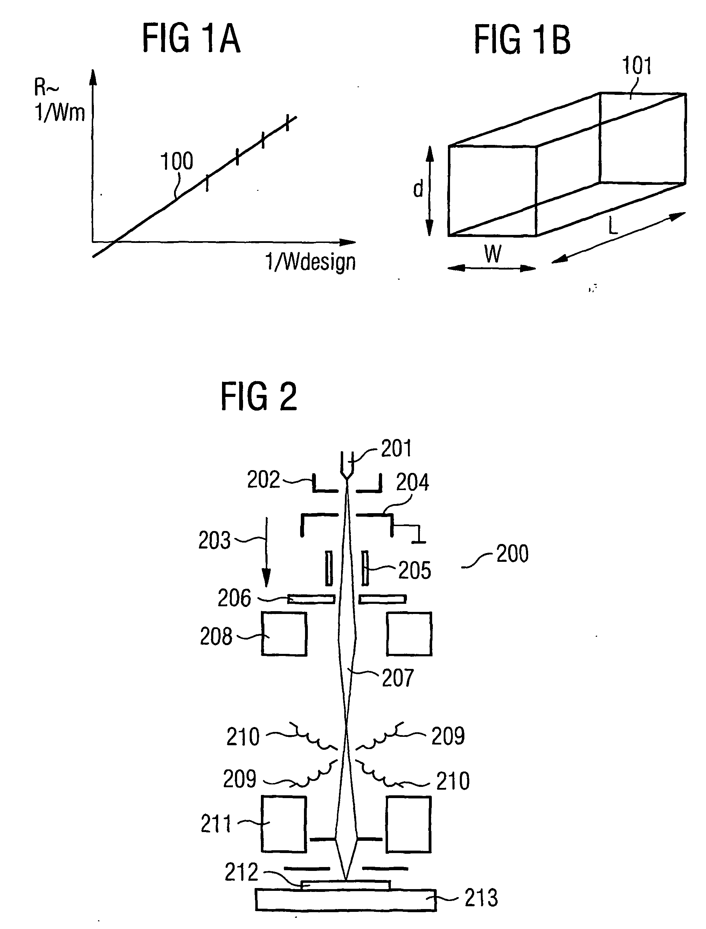

the resistance R of a set of straight lines having the same length L is measured as a function of the designed linewidth $W_{design}$, i.e. as drawn by the circuit designer on the screen (see offset curve 100 in **Fig.1A).**

This method is not capable of obtaining the real width M of the straight line structure as only the offset towards the designed values of the width is extracted.

**Fig.1B** shows an example of a straight line structure 101 having the thickness d, a width W and a length L.

The method for electrically determining the width of patterned structures described above uses only straight lines with different widths W.

It can not estimate the contribution of changes of width within one line. The offset between the measured value $W_m$ and the designed width is determined by an extrapolation towards the end of the range of widths, which makes it an unstable result being very sensitive to the set of width values W used.

The real value of the width M can not be found since only the designed width can be taken into account

The aim of the invention is to present a system and a method to selfconsistently calibrate the electrical measurement set-up that is used in the control and optimization of lithographic processes as used in the semiconductor technology.

This measurement method yields the real value M of the patterned structures and in parallel an accurate value for the offset introduced by the electrical measurement and the pattering process.

Another advantage of this method is that the extracted value for the offset can be used to monitor differences in the lithographic and post-lithographic processing required to obtain electrically measurable patterned lines. Changes in this processing can be reflected in changes of the extracted value for the offset.

Another advantage of the invention is that it only requires a limited set of structures. Another advantage of the present invention is that also the influence of the corner effects on the lithographic process can be determined from electrical measurements. This influence can then be corrected for in an optimization of the lithographic process.

The method can be used to correlate the true width M, the measured width W and their difference 2S.

Even if the measured width W is determined by e.g. AFM or SEM and the difference to the ELM measuring result is known as it is a parameter characterizing a certain technology, the true width M can not be extracted.

If the measured width W is measured and the true width M is determined, then the difference 2S can be used to optimize the patterning process.

For the purpose of teaching of the invention, preferred embodiments of the method are described in the sequel. Features of the embodiments of the different aspects of the invention can be also combined. It will however be apparent to the person skilled in the art that other alternative and equivalent embodiments of the invention can be conceived and reduced to practice without departing from the scope of the invention as defined in the claims.

The method for calibration of an electrical linewidth measurement system of the invention is defined in claim 1.

Furthermore, a wafer is disclosed for being used in the above described method for calibration of an electrical linewidth measurement system, wherein the wafer comprises the calibration.

An electrical linewidth measurement calibration system according to the invention is defined in claim 7 and comprises a processing unit which is adapted to execute the steps of the method of claim 1.

One advantage of the present invention is the simple and thus cost-saving way for calibration of an electrical linewidth measurement system.

Furthermore, the invention provides a very time-saving calibration of an electrical linewidth measurement system.

According to the invention, the measured width of the first straight line structure, the measured width of the second straight line structure and the measured width of the third line structure is determined using formulas according to Ohm's law.

The measured width $W_{m1}$ of the first straight line structure, the measured width $W_{m2}$ of the second straight line structure and the measured width $W_{m12}$ of the third line structure are determined using the following formulas:

$$W_{m1} = \frac{\rho}{d} \cdot \frac{L_1}{R_1},$$

$$W_{m2} = \frac{\rho}{d} \cdot \frac{L_2}{R_2},$$

$$W_{m12} = \frac{\rho}{d} \cdot \frac{L_{12}}{R_{12}}$$

wherein

- $\rho$ is a predetermined resistivity of the line structure material,
- d is the thickness of the line structure,
- $L_1$ is the length of the first straight line structure,
- $L_2$ is the length of the second straight line structure,
- $R_1$ is the electrical resistance of the first straight line structure,
- $R_2$ is the electrical resistance of the second straight line structure,
- $L_{12}$ is the length of the third line structure, and
- $R_{12}$ is the electrical resistance of the third line structure.

The first width $M_1$, the second width $M_2$ and the third width $M_{12}$ can be determined using the following formulas:

$$M_1 = W_{m1} + \Delta S,$$

$$M_2 = W_{m2} + \Delta S,$$

and

$$M_{12} = W_{m12} + \Delta S,$$

wherein $\Delta S$ is an offset value representing an additive device error. In other word, $\Delta S$ represents the error of the used measuring tool.

The first width $M_1$ and the second width $M_2$ are determined further using the following formulas:

$$M_1 = W_{m1} + 2 \cdot S,$$

$$M_2 = W_{m2} + 2 \cdot S,$$

$$S = \frac{- W_{m12} \cdot (L_2 \cdot W_{m1} + L_1 \cdot W_{m2}) + W_{m1} \cdot W_{m2} \cdot L_{12}}{W_{m12} \cdot (W_{m2} - W_{m1})},$$

wherein

$$L_1 = l_1 - S,$$

$$L_2 = l_2 + S,$$

- $L_{12}$ is the length of the third line structure, and
- S represents the half of the error of the electrical measurement with respect to the physical width, and thus represents the sheath thickness.

Furthermore, at least two of the following straight line structures can have the same length:

- the first straight line structure,
- the second straight line structure, and/or
- the third line structure.

This embodiment of the invention further simplifies the calibration method.

According to a further preferred embodiment of the invention,

- the first line portion having the first width has the same length as the first straight line structure, and
- the second line portion having the second width has the same length as the second straight line structure.

In the wafer at least two of the following straight line structures can have the same length:

- the first straight line structure,
- the second straight line structure, and/or
- the third line structure.

Furthermore, the electrical linewidth measurement calibration system may comprise a wafer including the calibration structure.

In other words, a set of structures is presented for selfconsistently calibrating the electrical measurement set-up and to obtain the real value of the width M of the structures as determined by this electrical measurement.

This set of structures contains two straight lines. The set of structures further contains one non-straight structure having a non-rectangular layout.

The width of the third line structure or parts thereof are selected from the width of the two straight line structures.

This set of structures comprises at least two straight line structures. This set of structures comprises also at least one non-straight structure having a non-rectangular layout. The width of this non-straight structure or parts thereof is selected from a finite set of discrete values. These discrete values being the widths of the straight line structures.

In the invention a method is presented to calibrate in a selfconsistent way the electrical measurement set-up and to determine the true value of the width M of the structures as determined by this electrical measurement.

In an embodiment of the invention the following measurement sequence is used. First, an electric resistance $R_1$ of a first straight line structure having a width $M_1$ and first length is measured.

From this electrical measurement a measured first width $W_{m1}$ is extracted using Ohm's law.

Then, an electric resistance $R_2$ of a second straight line structure having the second width $M_2$ and preferably, but not necessarily the same length is determined, i.e. measured.

From this second electrical measurement a measured second width $W_{m2}$ is extracted using Ohm's law.

Finally, the resistance $R_{12}$ of a third line structure is measured preferably also having the length.

From this third electrical measurement an equivalent width, further denoted as measured third width $W_{m12}$, is extracted using Ohm's law.

The measured third width $W_{m12}$ is described as being equivalent because the width of this third structure is not constant and therefore, one can not determine a physical width for such a structure.

With reference to claim 1:

First the resistance $R_i$, with i being an integer, of a first set of structures of straight lines comprising at least two straight lines having a width $M_i$ and known length $L_i$, is measured.

From this electrical measurement for each straight line a measured width $W_{mi}$ can be extracted using Ohm's law.

Finally the electrical resistance $R_{ij}$, with i and j being integers, of a second set of structures of non-straight lines, comprising at least one non-straight line, is measured. The structures comprised in this second set of structures have known lengths $L_{ij}$. From this electrical measurement an equivalent measured width $W_{mij}$ is extracted using Ohm's law.

This width $W_{mij}$ is described as being equivalent because the width of these structures is not constant and therefore one can not determine a physical width for such a structure.

These electrical measurements yield a set of equations, using Ohm's law, describing the resistance of the structures of the first and second set as function of the known parameters, such as layer thickness d, layer resistivity $\rho$ and length L and as function of the unknown parameters, i.e. the real width M and offset 2S.

Since each structure of the second set can be decomposed into the structures of the first set, the resistance of each structure of the second set can be described as function of the width $W_{mi}$ of the structures of the first subset.

From this set of equations the real value of the width $M_i$ of the straight structures are calculated.

The offset 2S representing the error of the electrical measurement with respect to the physical width, and thus representing the sheath thickness and the measurement set-up is calculated with the same set of equations. Thus, the electrical measurement and measurement set-up is calibrated.

The range of width of the straight lines used can be limited so that an offset is obtained that is not dependent on the width.

The method may be used to measure changes in the lithographic and post-lithographic processing, required to obtain electrically measurable patterned lines. So this value can be used to monitor this type of changes or to compare different patterning processes.

The method may be used to determine the contribution of changes in geometry to the patterning process itself.

The determined first width, the second width, the third width and preferably the determined error of the electrical measurement with respect to the physical width may be used for the layout design of an electronic circuit.

Preferred embodiments of the invention will now be described in detail with reference to the accompanying drawings.

Figure 1A and 1B      show a diagram showing the measured electrical resistance as a function of the inverse of the designed width, wherein the vertical stripes on the curve represent actual measurement points (Figure 1A) and an example of a straight line structure;

Figure 2      shows an electron beam exposure system.

Figures 3A to 3C      show a wafer (Figure 3A), a used module of the wafer (Figure 3B) and an enlarged view of a line structure (Figure 3C) according to an embodiment of the invention;

| Figure 4 | shows a four-wire connection scheme used for measuring the linewidth according to a preferred embodiment of the invention; |
| --- | --- |
| Figures 5A to 5C | show a first straight line structure (Figure 5A), a second straight line structure (Figure 5B) and a third line structure (Figure 5C) according to a first embodiment of the invention; |
| Figures 6A to 6C | show a first straight line structure (Figure 6A), a second straight line structure (Figure 6B) and a third line structure (Figure 6C) according to a second embodiment of the invention; |
| Figures 7A to 7D | show further examples of a respective third line structure according to further embodiments of the invention; |
| Figure 8 | shows further examples of a third line structure according to further embodiments of the invention; |
| Figure 9 | shows a further example of a third line structure according to a further embodiment of the invention; |
| Figure 10 | shows further examples of a third line structure according to further embodiments of the invention; |
| Figures 11A to 11C | show measured and expected linewidths as a function of a number of features or their equivalent length (Figure 11A: features are bumps; Figure 11B: features are pinches; Figure 11C: features are pinches and bumps); |
| Figure 12 | shows a correlation between a measured and an expected width for different widths and poly-Si or amorph-Si; |
| Figures 13A to 13D | show a measured linewidth as a function of the number of bends for angles 28 (Figure 13A), 45 (Figure 13B) and 90 (Figure 13C) and a measured linewidth as a function of the angle of bends (Figure 13D); |
| Figure 14 | shows a diagram illustrating the linearity of the ELM for a large range of linewidths compared to SEM; and |

**Fig.2** shows an electron beam exposure system 200 including an electron source 201 and a Wehnelt cylinder 202 being arranged in the electron flow direction, in **Fig.2** symbolized by an arrow 203.

The electron source 201 has a negative electric potential of about 10 kV to 50 kV. An anode 204 has a hole in its center so that the electron beam 207 can pass through the hole. The anode 204 is put on mass potential.

The Wehnelt cylinder 202 is used for focussing the electrons of the electron beam 207.

Furthermore, condensator plates 205 are provided in the electron beam direction 203. The condensator plates 205 provide an electric field for fading out the electron beam 207.

The electron beam 207 further passes an aperture 206 and a magnetic lense 208 formed by ring coils, wherein the aperture 206 and the magnetic lense 208 are arranged in the electron beam direction 203 after one another and after the condensator plates 205.

Using further provided cylinder coils 209, 210 the electron beam 207 is refracted in the first direction (using first cylinder coils 209) and in the second direction (using second cylinder coils 210).

A further magnetic lense 211 is provided for focussing the electron beam 207 to a diameter of 0,01 to 0,5 $\mu$m in the writing plane.

A surface of a wafer 212 is arranged in the writing plane and the wafer 212 is put on a laser controlled movable table 213.

According to this preferred embodiment, a Leica™ VB6-HR as an electron beam exposure system 200 is used.

In this context it should be mentioned that the wafer 212 with the calibration structure may also be produced using optical lithography methods.

Furthermore, it is advantageous to use the same process for the calibration wafer as will be used for the target application wafer.

**Fig.3A** shows the wafer 300 in further detail. A plurality of modules 301 is structured on the wafer 300. In this context it should be mentioned that the wafer 300 according to this embodiment is a test wafer used for calibration of the system.

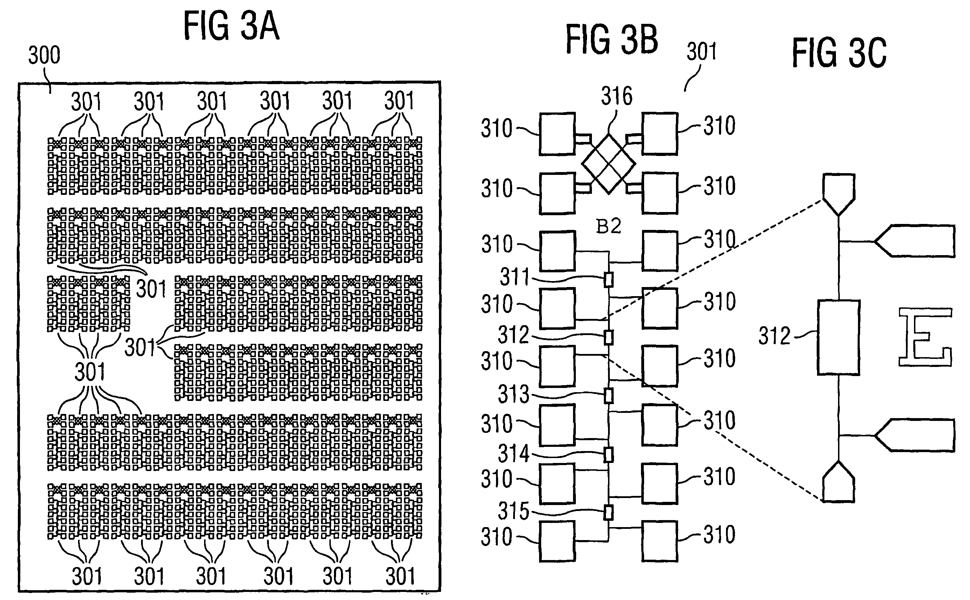

One example module 301 is shown in **Fig.3B** in an enlarged view.

Each module 301 comprises a bonding pad configuration including 16 contacting pads 310. The bonding pad configuration is used for measuring during one probecard touchdown using an electrical linewidth measurement system which will further be described in detail.

The electrical linewidth measurement system used for determination of a linewidth is based on the Electroglas Prober Horizon™ 4080X and the Keithley Parametric Tester™ S900B. An additional component for a precise voltage measurement is the Digital Multimeter Keithley™ 2010, which is connected to the Keithley Parametric Tester™ S900B.

The Electroglas Prober Horizon™ 4080X is an automated wafer probing system. A wafer prober is used to measure electrical parameters of devices as well to control the front-end process steps. The wafer prober aligns each die on a wafer to pins on a probe card connected to a tester that measures electrical performance. Furthermore, the prober automatically realigns the wafer to the next die. On the prober, a Keithley™ probe card comprising 33 needles is installed, wherein the pins of the needles consist preferably of tungsten.

The Keithley Parametric Tester™ S900B is a parametric test system for semiconductor process monitoring and device characterization. It comprises a personal computer based system controlled by the Keithley™ Test Environment Software Platform.

Furthermore, two Force Measurement Units 9621 are provided, which can be programmed to limit current while forcing voltage or to limit voltage while forcing current.

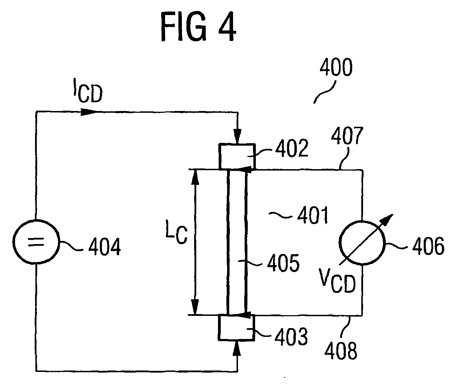

In this context, it should be mentioned that according to this embodiment of the invention, a four-wire connection scheme 400 is used to measure the width of a line structure 401 comprising two contacting points 402, 403, as shown in **Fig.4**.

A current source 404 is provided for forcing a test current $I_{CD}$ to the first contacting pad 402, the main body 405 of the line structure 401 and the second contacting pad 403. Furthermore, a voltmeter 406 is connected to the first contacting pad 402 via a first lead 407 and to the second contacting pad 403 via a second lead 408. The voltmeter is measuring a measured voltage $V_{CD}$.

The main body 405 of the line structure 401 has a line length $L_C$, i.e. in general, the line structure has a line length $L_C$ and a linewidth $M_i$. A measured sheet resistance is denoted with $\rho_S$.

Thus, a measured line resistance $R_{CD}$ is calculated according to

$$R_{CD} = \frac{V_{CD}}{I_{CD}}. \tag{3}$$

The linewidth $W_{mi}$ is determined by the following formula:

$$W_{mi} = \frac{L \cdot \rho_S}{R_{CD}}. \tag{4}$$

Each module 301 includes, as shown in **Fig.3B,** six structures, a first structure 316 formed by a so-called Van der Pauw structure and five straight line structures 311, 312, 313, 314, 315.

**Fig.3C** shows an enlarged view of a symbolized straight line structure 312 being electrically connected to four contacting pads for being contacted to a current source and a voltmeter as described above in connection with **Fig.4.**

**Fig.5A** to **Fig.5C** show a set of straight line structures used for self-consistently calibrating an electrical measurement set-up and to obtain the real value of the width M of the straight line structures as defined by this electrical measurement according to a first embodiment of the invention.

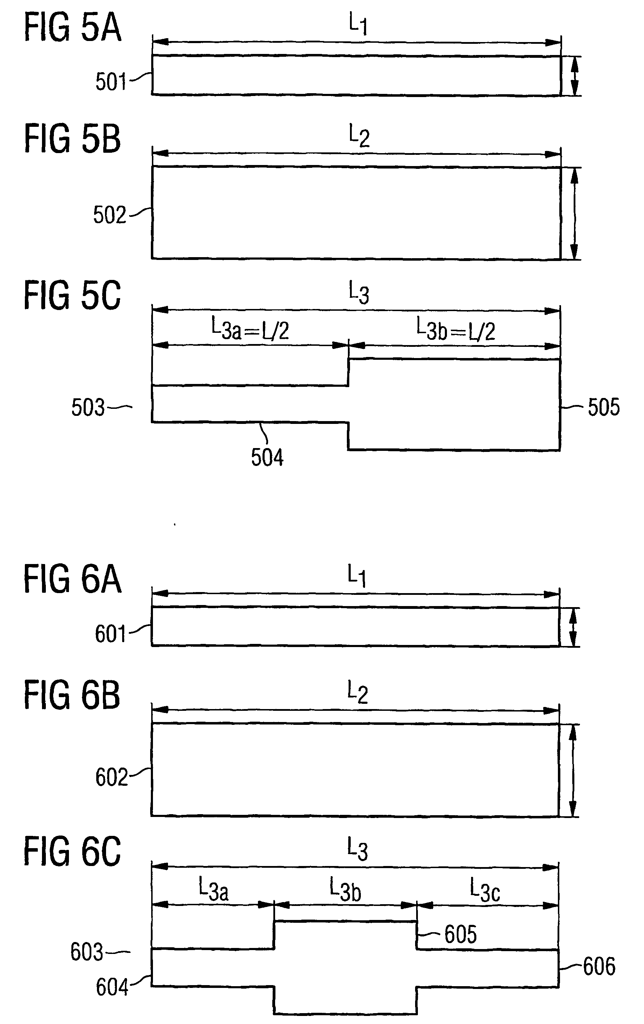

In one embodiment of this aspect this set of structures contains two straight lines 501, 502 as shown in **Fig. 5A** and **Fig.5B.**

In this context, straight means that the width $M_i$ of the respective straight line structure i and its orientation do not change along its entire length $L_i$ or, in other words, the layout of this straight line structure is a rectangle.

According to this embodiment, the straight line structures 501, 502 may have the same length L, so in the example given in **Fig.5A** and **Fig.5B** the length $L_1$ of the first straight line structure 501 equals the length $L_2$ of the second straight line structure 502.

The two straight line structures 501, 502, however, have a different width $M_1$, $M_2$.

This set of line structures also contains one non-straight structure as a third line structure 503 having a non-rectangular layout. The third line structure 503 comprises a first line region 504 and a second line region 505. The width of the third line structure 503 or parts thereof are selected from the width $M_1$, $M_2$ of the two straight lines 501, 502.

In the example given in **Fig.5C** the width $M_{12}$ of a region 504, 505 of the third line structure 503 can have either the value $M_1$ or the value $M_2$. This non-straight structure 503 is thus a combination of the two straight lines 501, 502. In the example given in **Fig.5C** the third line structure 503 thus has a width $M_1$ for the first line region 504 with a length $L_{3a}$, a width $M_2$ for the second line region 505 with a length $L_{3b}$, wherein $M_1 < M_2$. According to this preferred embodiment of the invention, the total length $L_3$ ($L_3 = L_{3a} + L_{3b}$) of the non-straight line structure 503 is equal with the length $L_1$ of the first straight line structure 501 and the length $L_2$ of the second straight line structure 502.

**Fig.6A** to **Fig.6C** show a set of straight line structures used for self-consistently calibrating an electrical measurement set-up and to obtain the real value of the width M of the straight line structures as defined by this electrical measurement according to a second embodiment of the invention.

The first straight line structure 601 and the second straight line structure 602 according to the second embodiment of the invention are the same compared with the first straight line structure 501 and the second straight line structure 502 according to the first embodiment of the invention.

The third line structure 603 comprises a first line region 604, a second line region 605 and a third line region 606. The width of the third line structure 603 or parts thereof are selected from the width $M_1$, $M_2$ of the two straight lines 601, 602.

In the example given in **Fig.6C** the width $M_{12}$ of a region 604, 605, 606 of the third line structure 603 can have either the value $M_1$ or the value $M_2$. This non-straight structure 503 is thus a combination of the two straight lines 601, 602. In the example given in **Fig.6C** the third line structure 603 thus has a width $M_1$ for the first line region 604 with a length $L_{3a}$, a width $M_2$ for the second line region 605 with a length $L_{3b}$ and again a width $M_1$ for the third line region 606 with a length $L_{3c}$, wherein $M_1 < M_2$. According to this second embodiment of the invention, the total length $L_3$ ($L_3 = L_{3a} + L_{3b} + L_{3c}$) of the non-straight line structure 603 is equal with the length $L_1$ of the first straight line structure 501 and the length $L_2$ of the second straight line structure 502.

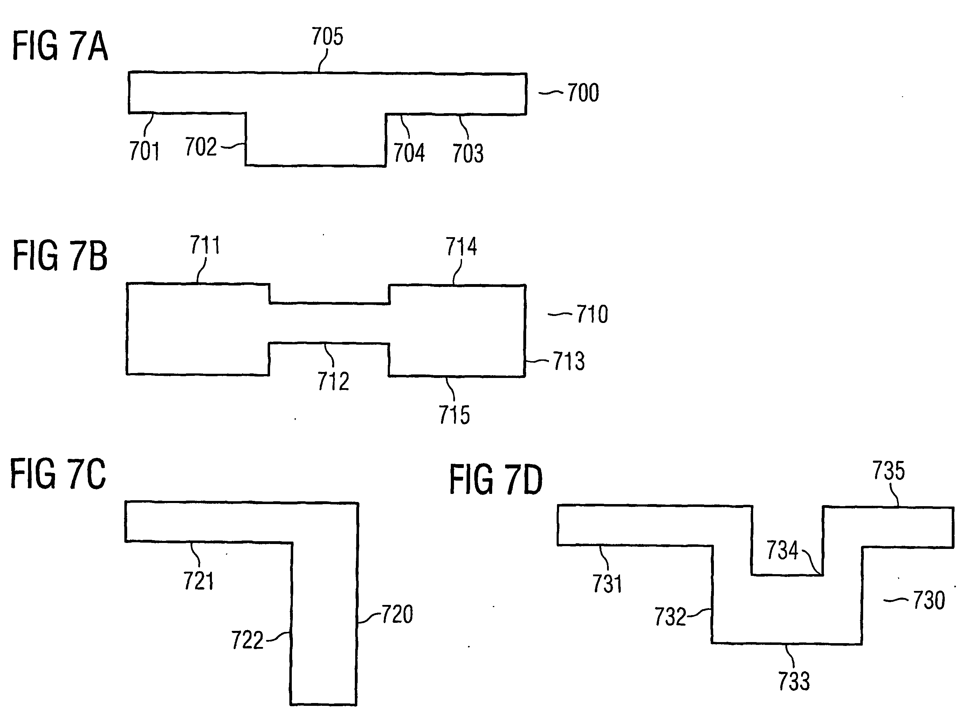

**Fig.7A** to **Fig.7D** show further examples of a respective third line structure 700, 710, 720, 730 according to further embodiments of the invention.

**Fig.7A** shows a third line structure 700 comprising a first region 701, a second region 702 and a third region 703, wherein the second region 702 has a width $M_2$ of the second straight line structure and the first region 701 and the third region 703 have a width $M_1$ of the first straight line structure, wherein $M_1 < M_2$. The second region 702 only extends over the first region 701 and the third region 703 on a first lateral side 704 of the third line structure 700; on the other lateral side 705 of the third line structure 700, the three regions 701, 702, 703 are aligned to each other.

**Fig.7B** shows a third line structure 710 comprising a first region 711, a second region 712 and a third region 713, wherein the second region 712 has a width $M_1$ of the first straight line structure and the first region 711 and the third region 713 have the width $M_2$ of the second straight line structure, wherein $M_1 < M_2$. The second region 712 is formed by a pitch, thereby forming a recess on each lateral side 714, 715 of the third line structure 710.

**Fig.7C** shows a third line structure 720 comprising a first region 721 and a second region 722, which are arranged to each other in an angle of 90°. The first region 721 has the width $M_1$ of the first straight line structure and the second region 722 has the width $M_2$ of the second straight line structure.

**Fig.7D** shows a third line structure 730 comprising a first region 731, a second region 732, a third region 733, a fourth region 734 and a fifth region 735. All regions have either the width $M_1$ of the first straight line structure or the width $M_2$ of the second straight line structure. The second region 732 is arranged to the first region 731 in an angle of 90°. The third region 733 is arranged to the second region 732 in an angle of 90°. The fourth region 734 is arranged to the third region 733 in an angle of 90°. The fifth region 735 is arranged to the fourth region 734 in an angle of 90°. The entire third line structure 730 thus has a U-form structure.

According to this embodiment of the invention, each of the first region 731, the second region 732, the fourth region 734 and the fifth region 735 have the width $M_1$ of the first straight line structure, whereas the third region 733 has the width $M_2$ of the second straight line structure.

In this context it should be mentioned, that the angle of 90° is only illustrative in this embodiment. Any angle may be used in the invention.

Furthermore, it should be mentioned that in the third line structure at least once a change of its width has to occur according to the invention.

In general, the width of the non-straight structure or parts thereof is selected from a finite set of discrete values. These discrete values being the widths of the straight lines.

This third line structure can be decomposed into the structures contained in the first subset, i.e. for example the first straight line structure and the second straight line structure.

Generally, the structures in the second subset differ from a straight line due to changes in width, e.g. narrowing or widening the line, the presence of bulges along the line, parts of the structure oriented in another direction or a combination thereof. The width of this non-straight structure or parts thereof is selected from a finite set of discrete values. These discrete values being the widths of the straight lines of the first subset.

In this context it should be mentioned that an arbitrary number of regions having the first width $M_1$ and an arbitrary number of regions having the second width $M_2$ may be provided, thereby forming a alternating linear or angled (e.g. rectangle) structure.

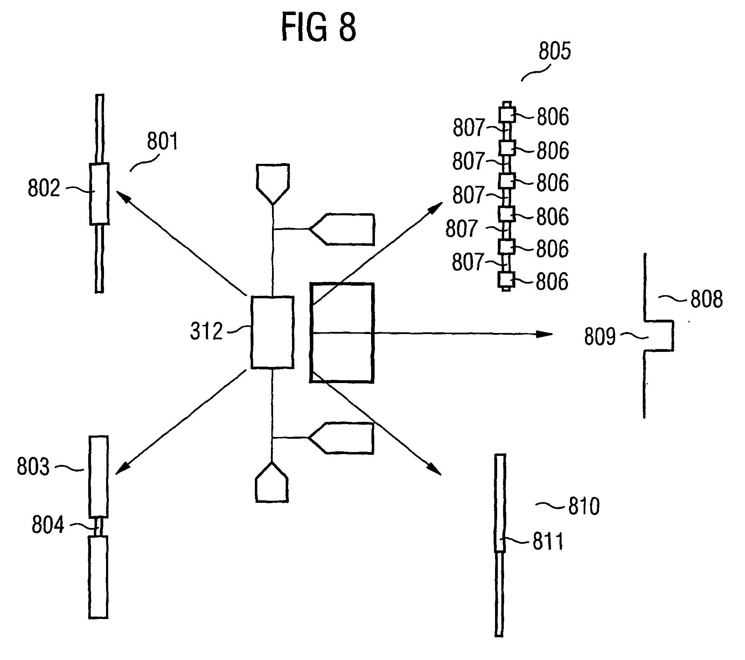

To further illustrate this aspect of the invention, **Fig.8** shows five different possibilities for a third line structure 312 of **Fig.3C,** namely

- a first line 801 with one discrete bump 802,
- a second line 803 with one discrete pinch 804,
- a third line 805 with a predetermined number of alternating bumps 806 and pinches 807,
- a fourth line 808 in a U-shape 809, thereby forming a bendy line, and
- a fifth line 810 comprising a single width change 811 along the entire length of the line.

In one embodiment of the invention, a measurement sequence is used as will now be described in detail.

First the resistance $R_1$ of the first straight line having the width $M_1$ and length L is measured. From this electrical measurement a width $W_{m1}$ is extracted using Ohm's law. Then the resistance $R_2$ of the second straight line having width $M_2$ and the same length L is measured. From this second electrical measurement a width $W_{m2}$ is extracted again using Ohm's law. Finally the resistance $R_{12}$ of the third line structure is measured having length L. This third line structure is a non-straight structure as described above. From this third electrical measurement an equivalent width $W_{m12}$ is extracted using Ohm's law.

This equivalent width $W_{m12}$ is described as being equivalent because the width of the third line structure is not constant and therefore one can not determine a physical width for such a structure.

In **Fig.5A** to **Fig.5C** this embodiment is illustrated for the case where both straight lines have the same length L and the non-straight line has the same length L. This third line structure is composed of two parts: the first region 504 having width $M_1$ and length $\frac{L}{2}$, the second region 505 having width $M_2$ and length $\frac{L}{2}$.

These three measurements yield the following equations in this example. It should be mentioned that the offset not only occurs along the vertical lines, but along all sidewalls of the line structure.

$$R_1 = \frac{\rho}{d} \cdot \frac{L_1}{W_{m1}}, \tag{4}$$

$$R_2 = \frac{\rho}{d} \cdot \frac{L_2}{W_{m2}}, \tag{5}$$

$$R_{12} = \frac{\rho}{d} \cdot \frac{L}{W_{m12}} = \frac{\rho}{d} \cdot \left( \frac{\frac{L}{2}}{W_{m1}} + \frac{\frac{L}{2}}{W_{m2}} \right), \tag{6}$$

The first width $M_1$, the second width $M_2$ and the third width $M_{12}$ may be determined using the following formulas:

$$M_1 = W_{m1} + \Delta S, \tag{7}$$

$$M_2 = W_{m2} + \Delta S, \tag{8}$$

and

$$M_{12} = W_{m12} + \Delta S, \tag{9}$$

wherein $\Delta S$ is an offset value representing an additive device error.

Alternatively or additionally, the first width $M_1$ and the second width $M_2$ may be determined further using the following formulas:

$$M_1 = W_{m1} + 2 \cdot S, \tag{10}$$

$$M_2 = W_{m2} + 2 \cdot S, \tag{11}$$

$$S = \frac{- W_{m12} \cdot (L_2 \cdot W_{m1} + L_1 \cdot W_{m2}) + W_{m1} \cdot W_{m2} \cdot L_{12}}{W_{m12} \cdot (W_{m2} - W_{m1})}, \tag{12}$$

wherein

$$L_1 = l_1 - S, \tag{13}$$

$$L_2 = l_2 + S, \tag{14}$$

- $\rho$ is a predetermined resistivity of the line structure material,
- d is the thickness of the line structure,
- $L_1$ is the length of the first region of the third line structure,
- $L_2$ is the length of the second region of the third line structure,
- $R_1$ is the electrical resistance of the first straight line structure,
- $R_2$ is the electrical resistance of the second straight line structure, and
- $L_{12}$ is the length of the third line structure,
- $R_{12}$ is the electrical resistance of the third line structure.
- S is representing the half of the error of the electrical measurement with respect to the physical width, and thus is representing the sheath thickness.

    From this set of equations the real value of the width of the two straight structures can be calculated, giving the real values $M_1$, $M_2$. The offset value $2 \cdot S$ represents the error of the electrical measurement and the measurement set-up is calculated with the same set of equations.

Using this set of equations, the electrical measurement and measurement set-up is self-consistently calibrated.

The range of width of the straight lines used can be limited so that an offset is obtained that is not dependent on the width. For every measurement sequence a different set of structures can be used, each set of structures having its own limited range of width.

In general, a measurement sequence is used. First the resistance $R_i$, with i being an integer, of a first set of straight line structures, i.e. of a first set of straight lines comprising at least two straight lines having width $M_i$ and known length $L_i$, is measured. From this electrical measurement for each straight line a width $W_{mi}$ can be extracted using Ohm's law. Finally, the resistance $R_{ij}$, with i and j being integers ($i \neq j$), of a second set of structures of non-straight lines, comprising at least one non-straight line, is measured.

In this context it should be mentioned that the second set of structures may comprise an arbitrary number (at least one) of portions having the width $M_i$ and an arbitrary number (at least one) of portions having the width $M_j$. The total length of the second set of structures is the total sum over the partial lengths having the width $M_i$ and the width $M_j$.

The structures comprised in this second set of structures have known lengths $L_{ij}$. From this electrical measurement an equivalent width $W_{mij}$ is extracted using Ohm's law. This width $W_{mij}$ is described as being equivalent because the width of these structures is not constant and therefore one can not determine a physical width for such a structure.

These electrical measurements yield a set of equations, using Ohm's law, describing the resistance of the structures of the first and second set as a function of the known parameters, such as layer thickness d, layer resistivity $\rho$ and length L and as function of the unknown parameters, i.e. the real width M and offset $2 \cdot S$. Since each structure of the second set can be decomposed into the structures of the first set, the resistance of each structure of the second set can be described as a function of the width $W_{mi}$ of the structures of the first subset.

From this set of equations the real value of the width $M_i$ of the straight structures can be calculated, yielding the real values $M_i$. The offset $2 \cdot S$ represents the error of the electrical measurement and measurement set-up is calculated with the same set of equations. Thus, the electrical measurement and measurement set-up is calibrated. The range of width of the straight lines used can be limited so that an offset is obtained that is not dependent on the width.

The contribution of changes in the patterning process itself can be monitored using the method of the invention.

When changing the lithographic and post-lithographic processing, which is required to obtain electrically measurable patterned lines, also the offset $2 \cdot S$ can change. So this value can be used to monitor this type of changes or to compare different patterning processes.

The contribution of the line edge roughness (LER) may be determined by applying a method of one of the other embodiments.

Ideally, the patterned line has a rectangular cross-section. However, in practice, the cross-section of the patterned line varies in a random way along the line, as can been seen from the changes in width, shape or slope of the line. The range of variation can be controlled by the changes in the patterning process. By measuring at least two lines having a different range of variation, e.g. a difference in slope or a difference in the amount of line edge roughness, the contribution of this variation can be determined.

The contribution of changes in geometry to the patterning process itself can be determined using the present invention.

In this case a measurement sequence is used. First the resistance $R_i$, with i being an integer, of a first set of structures of straight lines comprising at least two straight lines, i.e. having a rectangular layout, having width $M_i$ and known length $L_i$, is measured.

Finally the resistance $R_{ij}$, with i and j being integers, of a second set of structures of non-straight lines, comprising at least one non-straight line, is measured.

This second set of non-straight structures contains structures that are composed of the structures comprised in the first set of structures. The length of such a non-straight structure is equal to the sum of the lengths of the composing straight structures.

In this case both straight lines have the same length L and the non-straight line has a length 2L.

The resistance $R_{ij}$ of the non-straight lines should be equal to the sum of the previously measured resistance of the composing rectangular structures.

The deviation between the measured resistance $R_{ij}$ and the calculated resistance can be used to determine the effect of changes in geometry and to optimize the lithographic process.

According to a further embodiment of the invention a measurement sequence is used. First the resistance $R_1$ of the first straight line having width $M_1$ and length $L_1$ is measured. From this electrical measurement a width $W_{m1}$ is extracted using Ohm's law.

Then the resistance $R_2$ of the second straight line having width $M_2$ and the same length $L_2$ is measured. From this second electrical measurement a width $W_{m2}$ is extracted using Ohm's law.

Finally the resistance $R_{12}$ of the third structure is measured having length $L_{12}$. This third structure is a non-straight structure as defined in another embodiment of the invention.

From this third electrical measurement an equivalent width $W_{m12}$ is extracted using Ohm's law. This width $W_{m12}$ is described as being equivalent because the width of this third structure is not constant and therefore one can not determine a physical width for such a structure.

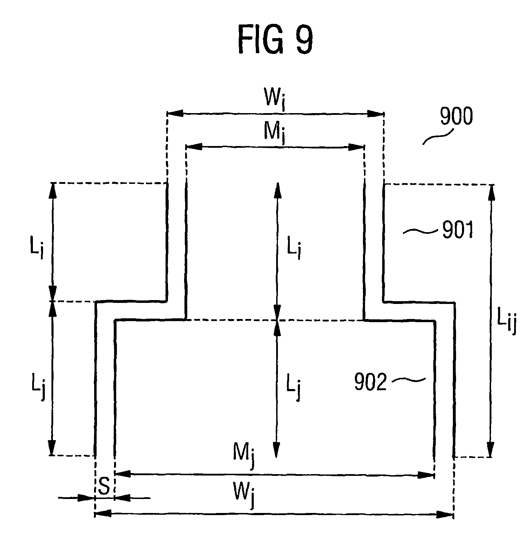

In **Fig.9** this embodiment is illustrated. The third line structure 900 is composed of two parts 901, 902 having a designed length of respectively $L_i$ and $L_j$, while the total designed length is $L_{ij}$. The lengths $L_i$ and $L_j$ of the composing parts to be taken into account during electrical measurements differ from this designed length due to the offset S. This offset not only occurs along the vertical lines, but along all sidewalls of the line structure.

$$R_i = \frac{\rho}{d} \cdot \frac{L_i}{W_{mi}}, \tag{15}$$

$$R_j = \frac{\rho}{d} \cdot \frac{L_j}{W_{mj}}, \tag{16}$$

$$R_{ij} = \frac{\rho}{d} \cdot \frac{L_{ij}}{W_{mij}} = \frac{\rho}{d} \cdot \left( \frac{l_i}{W_{mi}} + \frac{l_j}{W_{mj}} \right), \tag{17}$$

$$S = \frac{- W_{mij} \cdot (L_j \cdot W_{mi} + L_i \cdot W_{mj}) + W_{mi} \cdot W_{mj} \cdot L_{ij}}{W_{mij} \cdot (W_{mj} - W_{mi})}, \tag{18}$$

$$M_i = W_{mi} + 2 \cdot S, \tag{19}$$

$$M_j = W_{mj} + 2 \cdot S, \tag{20}$$

$$L_i = l_i - S, \tag{21}$$

$$L_j = l_j + S. \tag{22}$$

From this set of equations the real value of the width of the two straight line structures can be calculated, yielding the real values.

The offset $2 \cdot S$ represents the error of the electrical measurement and measurement set-up is calculated with the same set of equations as is done above.

Thus, the electrical measurement and measurement set-up is self-consistently calibrated. The range of width of the straight lines used can be limited so that an offset is obtained that is not dependant on width. For every measurement sequence a different set of structures can be used, each set of structures having its own limited range of width.

Table 1 shows measurements of 180, 150 and 130nm lines. The width of the pinch stands respectively for each line 100, 70 and 50nm and the length 500nm.

Table 1:

| | 180nm line | | 150nm line | | 130nm line | |
|---|---|---|---|---|---|---|
| | measured | expected | measured | expected | measured | expected |
| no pinch | 141.5 | | 112.1 | | 95.7 | |
| 100 nm pinch | 140.5 | 140.3 | 105.1 | 111.5 | 86.6 | 95.4 |
| 70 nm pinch | 138.8 | 139.2 | 104.1 | 110.9 | 86.2 | 94.9 |
| 50 nm pinch | 132.1 | 137.3 | 104.1 | 109.6 | 85.0 | 94.0 |

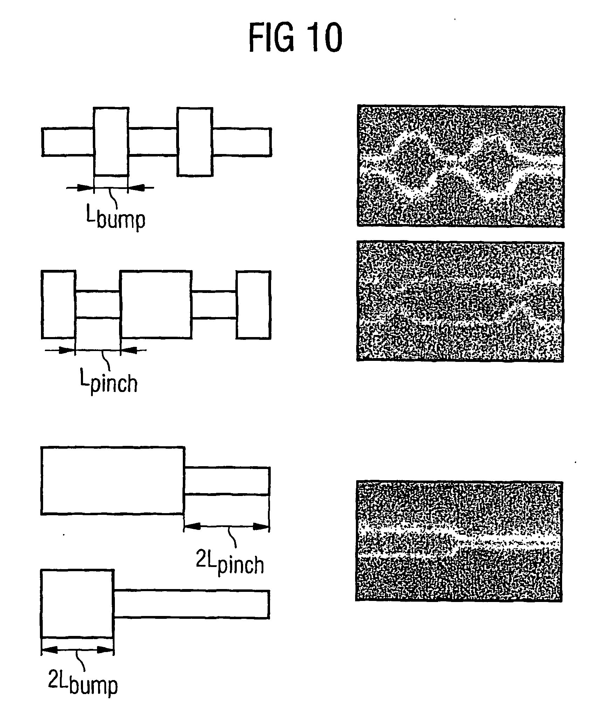

**Fig.10** shows a SEM picture of 50 x 500 nm pinch on a 180 nm line. The columns "expected" give a value calculated from the equation;

$$\frac{L}{W_{exp\,ected}} = \frac{L_{pinch}}{W^*_{mpinch}} + \frac{L - L_{pinch}}{W^*_{mline}}, \tag{23}$$

wherein L is the entire length ($60\mu m$), $L_{pinch}$ is the length of a pinch (500nm) and $W^*_{mline}$ and $W^*_{mpinch}$ are numbers given by ELM measurements on lines without any feature, i.e. straigth lines.

A comparison of the measured and expected values leads to the conclusion: there is no unexpected behaviour.

According to the combination of widths there are constant deviations from the expected values. These are related to the printing quality, which was proved for each combination on top-down SEM.

A confirmation to this conclusion is given also by the following measurements. To investigate whether a transition from higher to lower linewidth is influencing the resistance of the line, and to get an information about the material loss due to proximity effects, additional lines were designed and measured. These change the width once and have lengths of the both sections equivalent to the bumped and pinched lines.

An illustration of the design is given in **Fig.10.**

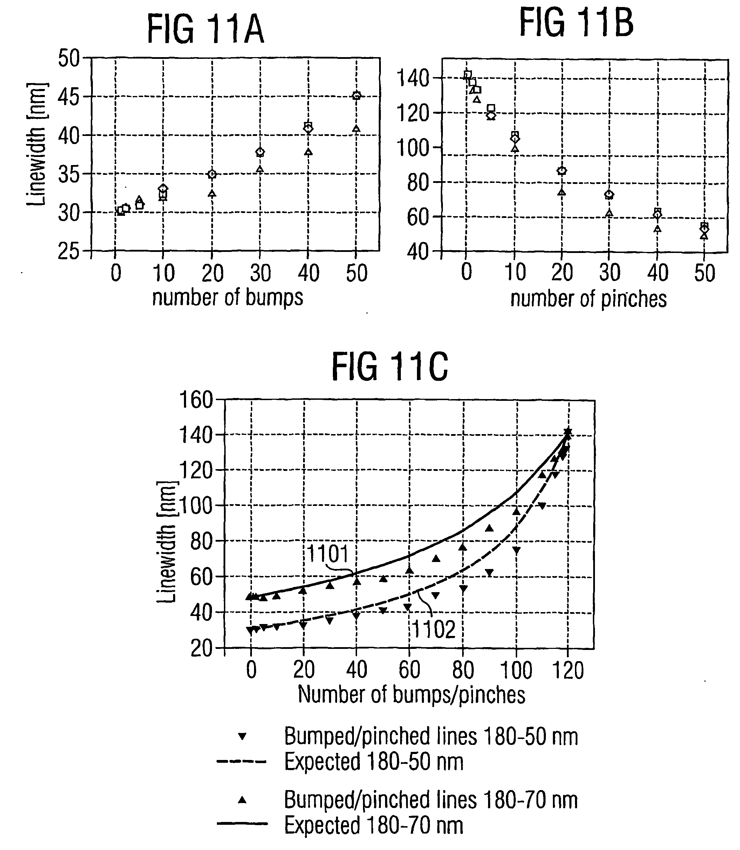

The graphs in **Fig.11A, Fig.11B, Fig.11C** show the measured equivalent linewidth $W_m$ as a function of the number of bumps **(Fig.11A)** and pinches **(Fig.11B).**

The values calculated from measured linewidths of blank lines are denoted again as "expected values". These are very close to the measurements of lines with single change of two widths.

The offset to the featured lines increases with increasing number of features.

A reason for that could partly be the material loss due to proximity effects, but also the effect of shortening of the bumps, e.g. due to sidewall passivation. No difference was seen between the two substrates used. The graphs are based on measurements of lines composed of doped amorphous silicon.

In **Fig.11C** bumped, pinched and alternating lines are plotted together against the number of bumps (for pinched lines: 120 minus number of pinches). The first line 1101 and a second line 1102 represent the calculated (expected) value respectively for combinations 180nm bump and 70 and 50nm pinch.

The deviation of the measurements from the expected values increases with increasing number of features. This is explained with the effect of shortening of the bumps due to sidewalls passivation, but also with material loss due to proximity effects.

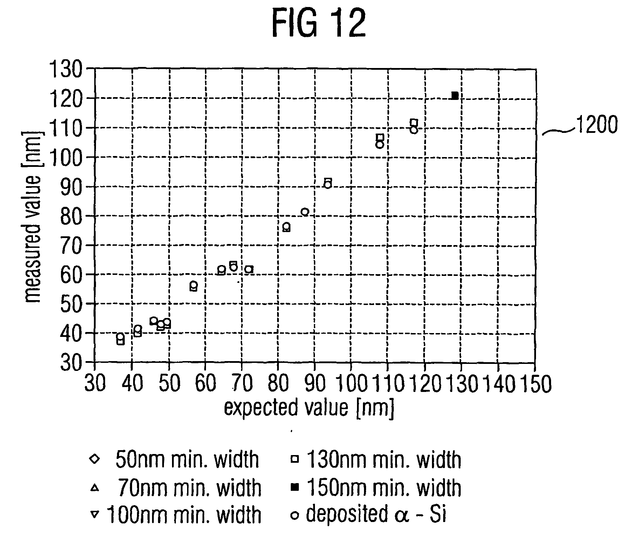

The trend of the measured linewidth against the expected width of these alternate lines is shown in a diagram 1200 of **Fig.12**.

The squares represent structures printed on poly-Si, and the circles such on amorph-Si.

No difference in the behaviour of both substrates was observed. A trend for decreasing measured linewidth values becomes perspicuous for combinations, which have more than 80nm difference in the width of bumps and pinches. These structures might play a key role for further calibration considerations.

A further point of the linearity study was the influence of bends on the electrical properties of polysilicon conductive lines of widths between 70 and 150nm. It was assumed that such influence would increase with increasing bend angle.

Therefore, in the design, bends of 28°, 45° and 90° were included. To determine a possible change in the resistance, lines with different number of bends were measured, where an additive dependence of the effect of each bend was expected.

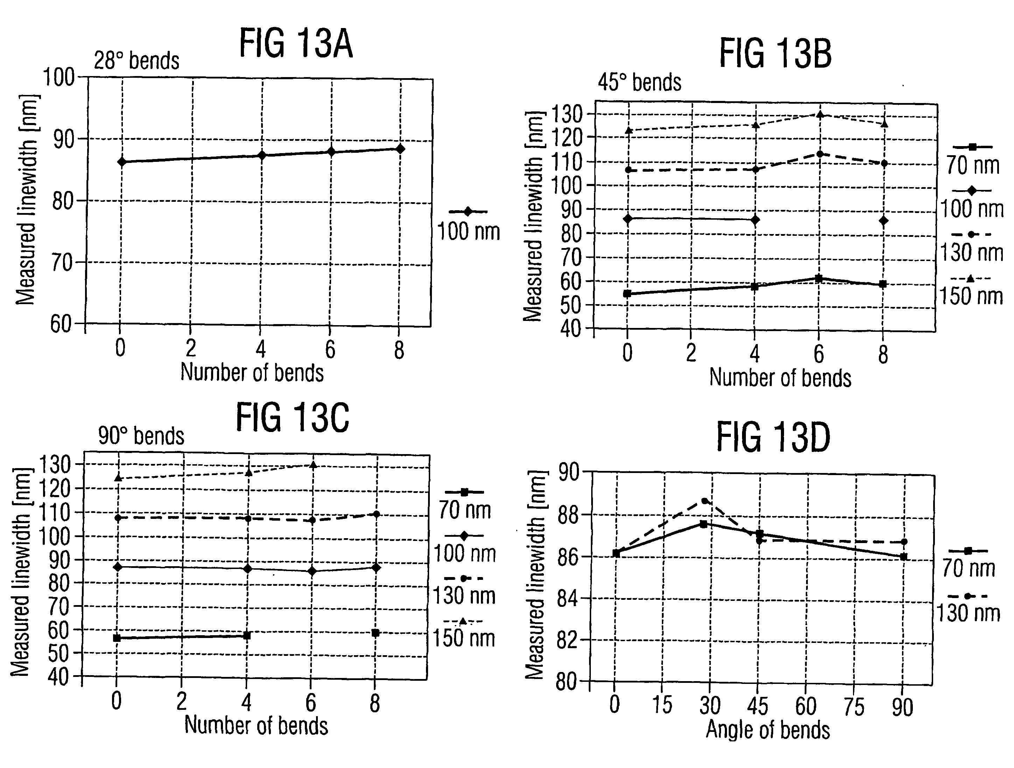

In **Fig.13A, Fig.13B, Fig.13C** the measured linewidths are shown as a function of the number of bends.

There is no increase of the resistance. In contrast to this the resistance decreases slightly, which is explained with an enlargement of the line in the corners.

Both curves in **Fig.13D** are plotted as a function of the angle for lines with 4 and 8 bends.

There is no visible dependence of the resistance in regards to the bend angle. Lines on the wafer were inspected with SEM to check the patterning quality in areas with different bends. The shape of the corners was slightly influenced by proximity effects, whereby the additional material seems to be more than the missing one. Additionally to that a small difference in the linewidth between vertical and tilted lines was observed.

Our conclusion after the measurement of bending lines is that bends do not influence the electrical properties of poly lines for linewidths down to 70nm. The small changes in the measured linewidth are most likely due to properties of the e-beam printing and subsequent processing.

As explained above top-down CD-SEM is the main metrology tool in the lithography.

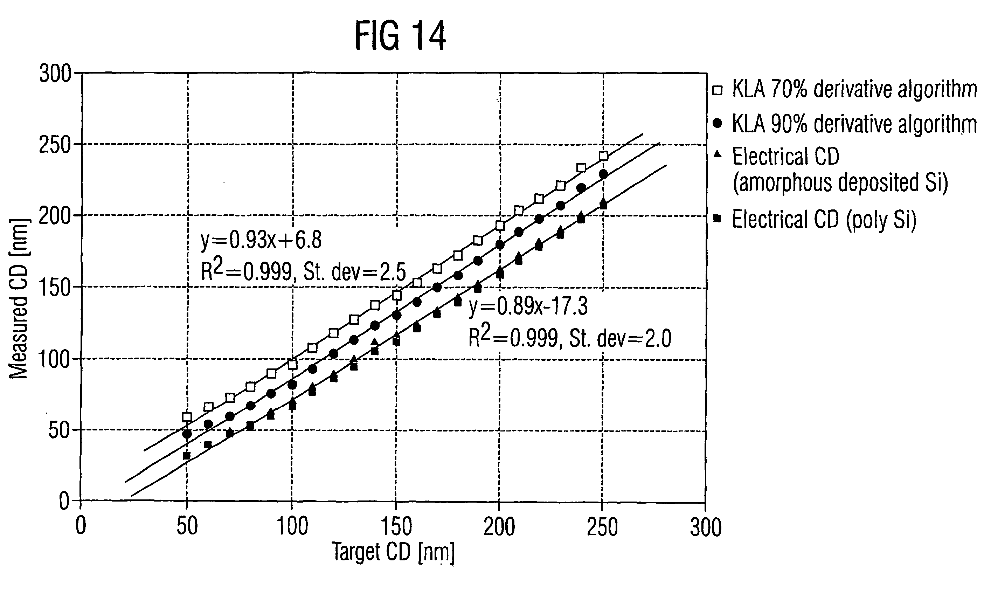

In **Fig.14**, the results obtained according to the present invention are compared with the CD-SEM results.

Such a comparison can show the capability of the ELM to be an independent metrology technique and also for sub 0.1 μm technology nodes.

The SEM measurements were done on top-down CD-SEM system KLA 8100XP using the 70% and 90% derivative algorithms.

The correlation between both measurement techniques can be seen in **Fig.14**, where the linewidths measured by SEM are plotted against the ELM values.

**List of reference numbers**

100    offset curve
101    straight line structure

200    electron beam exposure system
201    electron source
202    Wehnelt cylinder
203    arrow

204    anode
205    condensator plate
206    aperture
207    electron beam
208    magnetic lense
209    cylinder coil
210    cylinder coil
211    further magnetic lense
212    wafer
213    laser controlled movable table

300    wafer
301    module
310    contacting pad
311    straight line structure
312    straight line structure
313    straight line structure
314    straight line structure
315    straight line structure
316    first structure

400    four-wire connection scheme
401    line structure
402    contacting point
403    contacting point
404    current source
405    main body of the line structure
406    voltmeter
407    first lead
408    second lead

501    first straight line structure
502    second straight line structure
503    third straight line structure
504    first region third straight line structure
505    second region third straight line structure

601    first straight line structure
602    second straight line structure
603    third line structure
604    first line region
605    second line region
606    third line region

700    third line structure
701    first region
702    second region
703    third region
704    first lateral side third line structure
705    second lateral side third line structure
710    third line structure
711    first region
712    second region
713    third region
714    first lateral side third line structure
715    second lateral side third line structure
720    third line structure
721    first region

EP 1 278 997 B1

722     second region
730     third line structure
731     first region
732     second region
733     third region
734     fourth region
735     fifth region

801     first line
802     bump first line
803     second line
804     pinch second line
805     third line
806     bump third line
807     pinch third line
808     fourth line
809     U-shape fourth line
810     fifth line
811     width change fifth line

900     third line structure
901     part third line structure
902     part third line structure

1200    diagram

**Claims**

**1.** Method for calibration of an electrical linewidth measurement system, comprising the following steps:

- providing a calibration structure with

    a) a first straight line structure having a first width and made of a line structure material having a predetermined known resistivity, wherein the first line structure has a known first length and a known thickness,
    b) a second straight line structure having a second width different to said first width made of the line structure material, wherein the second straight line structure has a known second length and the same thickness as the first straight line structure,
    c) a third line structure made of the line structure material and having the same thickness as the first straight line structure, the third line structure consisting of at least one first component having the same width as the first straight line structure and at least one second component having the same width as the second straight line-structure, wherein the third line structure has a known third length $L_{ij}$, wherein the sum of the lengths of the at least one first component has a known first component length $L_i$ and wherein the sum of the lengths of the the at least one second component has a known second component length $L_j$,

- determining the electrical resistance of the first straight line structure,
- determining a calculated first width $W_{mi}$ using the resistivity of the line structure material, the first length, the thickness and the electrical resistance of the first straight line structure, and using Ohm's law,
- determining the electrical resistance of the second straight line structure,
- determining a calculated second width $W_{mj}$ using the resistivity of the line structure material, the second length, the thickness and the electrical resistance of the second straight line structure, and using Ohm's law,
- determining the electrical resistance $R_{ij}$ of the third line structure,
- determining a calculated third width $W_{mij}$ using the resistivity $\rho$ of the line structure material, the third length $L_{ij}$, the thickness d and the electrical resistance $R_{ij}$ of the third line structure, and using Ohm's law, according to the following formula:

15

$$W_{mij} = \frac{\rho}{d} \cdot \frac{L_{ij}}{R_{ij}},$$

- determining the error $2 \cdot S$ of the electrical linewidth measurement system with respect to the error corrected width, using the following formula:

$$S = \frac{-W_{mij} \cdot (L_j \cdot W_{mi} + L_i \cdot W_{mj}) + W_{mi} \cdot W_{mj} \cdot L_{ij}}{W_{mij} \cdot (W_{mj} - W_{mi})},$$

- determining an error corrected first width $M_i$ and an error corrected second width $M_j$ using the following formulas:

$$M_i = W_{mi} + 2 \cdot S,$$

$$M_j = W_{mj} + 2 \cdot S,$$

- calibrating the electrical linewidth measurement system using the error corrected first width $M_i$ and the error corrected second width $M_j$.

**2.** Method according to claim 1,
wherein the third line structure consists of exactly one first component and exactly one second component, and wherein the error corrected first width $M_1$ and the error corrected second width $M_2$ are determined using the following fomulas:

$$M_1 = W_{m1} + 2 \cdot S,$$

$$M_2 = W_{m2} + 2 \cdot S,$$

$$S = \frac{- W_{m12} \cdot (L_2 \cdot W_{m1} + L_1 \cdot W_{m2}) + W_{m1} \cdot W_{m2} \cdot L_{12}}{W_{m12} \cdot (W_{m2} - W_{m1})},$$

wherein

- $L_1$ is the known length of the first component of the third line structure,
- $L_2$ is the known length of the second component of the third line structure, and
- $L_{12} = L_1 + L_2$.

**3.** Method according to claim 1 or 2,
wherein at least two of the following straight line structures have the same length:

- the first straight line structure,
- the second straight line structure,
- the third line structure.

**4.** Method according to any of the claims 1 to 3,
wherein the third line structure has the same length as the first straight line structure and the second straight line structure.

**5.** Method according to any of the claims 1 to 4,
wherein the error corrected first width $M_i$ and the error corrected second width $M_j$ are used for the layout design of an electronic circuit.

**6.** Method according to any of the claims 1 to 5,
wherein the error of the electrical linewidth measurement system with respect to the error corrected width is used for the layout design of an electronic circuit.

**7.** Electrical linewidth measurement calibration system, comprising a processing unit which is adapted to execute the steps according to claim 1 for a calibration structure with

- a first straight line structure made of a line structure material having a predetermined known resistivity, wherein the first line structure has a known first length and a known thickness,
- a second straight line structure made of the line structure material, wherein the second straight line structure has a known second length and the same thickness as the first straight line structure,
- a third line structure made of the line structure material and having the same thickness as the first straight line structure, the third line structure consisting of at least one first component having the same width as the first straight line structure and at least one second component having the same width as the second straight line structure, wherein the third line structure has a known third length $L_{ij}$, wherein the at least one first component has a known first component length $L_i$ and wherein the at least one second component has a known second component length $L_j$.

**8.** Electrical linewidth measurement calibration system according to claim 7,
further comprising a wafer including the calibration structure.

**Patentansprüche**

**1.** Verfahren zur Kalibrierung eines elektrischen Linienbreitenmesssystems, die folgenden Schritte aufweisend:

- das Bereitstellen einer Kalibrierstruktur mit

  a) einer ersten geraden Linienstruktur, welche eine erste Breite aufweist, und welche Linienstruktur aus einem Linienstrukturmaterial mit einer vorgegebenen bekannten Resistivität gebildet ist, wobei die erste Linienstruktur eine bekannte erste Länge und eine bekannte Dicke aufweist,
  b) einer zweiten geraden Linienstruktur, welche eine zweite, von der genannten ersten Breite verschiedene, Breite aufweist, und welche Linienstruktur aus dem Linienstrukturmaterial gebildet ist, wobei die zweite gerade Linienstruktur eine bekannte zweite Länge und dieselbe Dicke wie die erste gerade Linienstruktur aufweist,
  c) einer dritten Linienstruktur, welche aus dem Linienstrukturmaterial gebildet ist, und welche dieselbe Dicke wie die erste gerade Linienstruktur aufweist, welche dritte Linienstruktur mindestens eine erste Komponente aufweist, welche dieselbe Breite wie die erste gerade Linienstruktur aufweist, und mindestens eine zweite Komponente, welche dieselbe Breite wie die zweite gerade Linienstruktur aufweist, wobei die dritte Linienstruktur eine bekannte dritte Länge $L_{ij}$ aufweist, wobei die Summe der Längen der mindestens einen ersten Komponente eine bekannte erste Komponentenlänge $L_i$ aufweist, und wobei die Summe der Längen der mindestens einen zweiten Komponente eine bekannte zweite Komponentenlänge $L_j$ aufweist,

- das Bestimmen des elektrischen Widerstandes der ersten geraden Linienstruktur,
- das Bestimmen einer berechneten ersten Breite $W_{mi}$ unter Verwendung der Resistivität des Linienstrukturmaterials, der ersten Länge, der Dicke und des elektrischen Widerstandes der ersten geraden Linienstruktur, und unter Verwendung des Ohmschen Gesetzes,
- das Bestimmen des elektrischen Widerstandes der zweiten geraden Linienstruktur,
- das Bestimmen einer berechneten zweiten Breite $W_{mj}$ unter Verwendung der Resistivität des Linienstrukturmaterials, der zweiten Länge, der Dicke und des elektrischen Widerstandes der zweiten geraden Linienstruktur, und unter Verwendung des Ohmschen Gesetzes,
- das Bestimmen des elektrischen Widerstandes $R_{ij}$ der dritten Linienstruktur,
- das Bestimmen einer berechneten dritten Breite $W_{mij}$ unter Verwendung der Resistivität $\rho$ des Linienstrukturmaterials, der dritten Länge $L_{ij}$, der Dicke $d$ und des elektrischen Widerstandes $R_{ij}$ der dritten Linienstruktur, und unter Verwendung des Ohmschen Gesetzes, gemäß der folgenden Formel:

$$W_{mij} = \frac{\rho}{d} \cdot \frac{L_{ij}}{R_{ij}},$$

- das Bestimmen des Fehlers 2·S des elektrischen Linienbreitenmesssystems bezüglich der fehlerberichtigten Breite, unter Verwendung der folgenden Formel:

$$S = \frac{-W_{mij} \cdot (L_j \cdot W_{mi} + L_i \cdot W_{mj}) + W_{mi} \cdot W_{mj} \cdot L_{ij}}{W_{ij} \cdot (W_{mj} - W_{mi})},$$

- das Bestimmen einer fehlerberichtigten ersten Breite $M_i$ und einer fehlerberichtigten zweiten Breite $M_j$ unter Verwendung der folgenden Formeln:

$$M_i = W_{mi} + 2 \cdot S,$$

$$M_j = W_{mj} + 2 \cdot S,$$

- das Kalibrieren des elektrischen Linienbreitenmesssystems unter Verwendung der fehlerberichtigten ersten Breite $M_i$ und der fehlerberichtigten zweiten Breite $M_j$.

**2.** Verfahren gemäß Anspruch 1,
bei dem die dritte Linienstruktur aus genau einer ersten Komponente und genau einer zweiten Komponente besteht, und
bei dem die fehlerberichtigte erste Breite $M_1$ und die fehlerberichtigte zweite Breite $M_2$ unter Verwendung der folgenden Formeln bestimmt werden:

$$M_1 = W_{m1} + 2 \cdot S,$$

$$M_2 = W_{m2} + 2 \cdot S,$$

$$S = \frac{-W_{m12} \cdot (L_2 \cdot W_{m1} + L_1 \cdot W_{m2}) + W_{m1} \cdot W_{m2} \cdot L_{12}}{W_{m12} \cdot (W_{m2} - W_{m1})},$$

wobei

- $L_1$ die bekannte Länge der ersten Komponente der dritten Linienstruktur ist,
- $L_2$ die bekannte Länge der zweiten Komponente der dritten Linienstruktur ist, und
- $L_{12} = L_1 + L_2$.

**3.** Verfahren gemäß Anspruch 1 oder 2,
bei dem mindestens zwei der folgenden geraden Linienstrukturen dieselbe Länge aufweisen:

- die erste gerade Linienstruktur,
- die zweite gerade Linienstruktur,
- die dritte Linienstruktur.

**4.** Verfahren gemäß einem der Ansprüche 1 bis 3,
bei dem die dritte Linienstruktur dieselbe Länge aufweist wie die erste gerade Linienstruktur und die zweite gerade Linienstruktur.

**5.** Verfahren gemäß einem der Ansprüche 1 bis 4,
bei dem die fehlerberichtigte erste Breite $M_i$ und die fehlerberichtigte zweite Breite $M_j$ für den Layout-Entwurf eines elektronischen Schaltkreises verwendet werden.

6. Verfahren gemäß einem der Ansprüche 1 bis 5,
bei dem der der auf die fehlerberichtigte Breite bezogene Fehler des elektrischen Linienbreitenmesssystems für den Layout-Entwurf eines elektronischen Schaltkreises verwendet wird.

7. Elektrisches Linienbreitenmessungs-Kalibriersystem, aufweisend eine Verarbeitungseinheit, welche eingerichtet ist, die Schritte gemäß Anspruch 1 auszuführen für eine Kalibrierstruktur mit

- einer ersten geraden Linienstruktur, welche aus einem Linienstrukturmaterial mit einer vorgegebenen bekannten Resistivität gebildet ist, wobei die erste Linienstruktur eine bekannte erste Länge und eine bekannte Dicke aufweist,
- einer zweiten geraden Linienstruktur, welche aus dem Linienstrukturmaterial gebildet ist, wobei die zweite gerade Linienstruktur eine bekannte zweite Länge und dieselbe Dicke wie die erste gerade Linienstruktur aufweist,
- einer dritten Linienstruktur, welche aus dem Linienstrukturmaterial gebildet ist, und welche die dieselbe Dicke wie die erste gerade Linienstruktur aufweist, welche dritte Linienstruktur mindestens eine erste Komponente aufweist, welche dieselbe Breite wie die erste gerade Linienstruktur aufweist, und mindestens eine zweite Komponente, welche dieselbe Breite wie die zweite gerade Linienstruktur aufweist, wobei die dritte Linienstruktur eine bekannte dritte Länge $L_{ij}$ aufweist, wobei die mindestens eine erste Komponente eine bekannte erste Komponentenlänge $L_i$ aufweist, und wobei die mindestens eine zweite Komponente eine bekannte zweite Komponentenlänge $L_j$ aufweist.

8. Elektrisches Linienbreitenmessungs-Kalibriersystem gemäß Anspruch 7,
weiterhin aufweisend einen Wafer, welcher die Kalibrierstruktur enthält.


**Revendications**

1. Procédé d'étalonnage d'un système de mesure de largeurs de ligne électrique, comprenant les étapes suivantes :

- fournir une structure d'étalonnage avec

   a) une première structure de lignes droites ayant une première largeur composée d'un matériau de structure de lignes ayant une résistivité connue prédéterminée, la première structure de lignes ayant une première longueur connue et une épaisseur connue,
   b) une deuxième structure de lignes droites ayant une deuxième largeur différente de ladite première largeur, composée du matériau de structure de lignes, la deuxième structure de lignes droites ayant une deuxième longueur connue et la même épaisseur que la première structure de lignes droites,
   c) une troisième structure de lignes composée du matériau de structure de lignes et ayant la même épaisseur que la première structure de lignes droites, la troisième structure de lignes étant constituée d'au moins un premier composant ayant la même largeur que la première structure de lignes droites et d'au moins un deuxième composant ayant la même largeur que la deuxième structure de lignes droites, la troisième structure de lignes ayant une troisième longueur connue $L_{ij}$, la somme des longueurs du au moins un premier composant ayant une longueur de premier composant connue $L_i$ et la somme des longueurs du au moins un deuxième composant ayant une longueur de deuxième composant connue $L_j$,

- la détermination de la résistance électrique de la première structure de lignes droites,
- la détermination d'une première largeur calculée $W_{mi}$ en utilisant la résistivité du matériau de structure de lignes, la première longueur, l'épaisseur et la résistance électrique de la première structure de lignes droites, et en utilisant la loi d'Ohm,
- la détermination de la résistance électrique de la deuxième structure de lignes droites,
- la détermination d'une deuxième largeur calculée $W_{mj}$ en utilisant la résistivité du matériau de structure de lignes, la deuxième longueur, l'épaisseur et la résistance électrique de la deuxième structure de lignes droites, et en utilisant la loi d'Ohm,
- la détermination de la résistance électrique $R_{ij}$ de la troisième structure de lignes,
- la détermination d'une troisième largeur calculée $W_{mij}$ en utilisant la résistivité $\rho$ du matériau de structure de lignes, la troisième longueur $L_{ij}$, l'épaisseur $d$ et la résistance électrique $R_{ij}$ de la troisième structure de lignes, et en utilisant la loi d'Ohm, selon la formule suivante :

$$W_{mij} = \frac{\rho}{d} \cdot \frac{L_{ij}}{R_{ij}},$$

- la détermination de l'erreur $2 \cdot S$ du système de mesure de largeurs de ligne électrique par rapport à la largeur corrigée d'erreur, en utilisant la formule suivante :

$$S = \frac{- W_{mij} \cdot (L_j \cdot W_{mi} + L_i \cdot W_{mj}) + W_{mi} \cdot W_{mj} \cdot L_{ij}}{W_{mij} \cdot (W_{mj} - W_{mi})},$$

- la détermination d'une première largeur corrigée d'erreur $M_i$ et d'une deuxième largeur corrigée d'erreur $M_j$ en utilisant les formules suivantes :

$$M_i = W_{mi} + 2 \cdot S,$$

$$M_j = W_{mj} + 2 \cdot S,$$

- l'étalonnage du système de mesure de largeurs de ligne électrique en utilisant la première largeur corrigée d'erreur $M_i$ et la deuxième largeur corrigée d'erreur $M_j$.

2. Procédé selon la revendication 1,
   dans lequel la troisième structure de lignes est constituée d'exactement un premier composant et d'exactement un deuxième composant, et dans lequel la première largeur corrigée d'erreur $M_1$ et la deuxième largeur corrigée d'erreur $M_2$ sont déterminées en utilisant les formules suivantes :

$$M_1 = W_{m1} + 2.S,$$

$$M_2 = W_{m2} + 2.S,$$

$$S = \frac{- W_{m12} \cdot (L_2 \cdot W_{m1} + L_1 \cdot W_{m2}) + W_{m1} \cdot W_{m2} \cdot L_{12}}{W_{m12} \cdot (W_{m2} - W_{m1})},$$

dans lesquelles

- $L_1$ est la longueur connue du premier composant de la troisième structure de lignes,
- $L_2$ est la longueur connue du deuxième composant de la troisième structure de lignes, et
- $L_{12} = L_1 + L_2$.

3. Procédé selon la revendication 1 ou 2,
   dans lequel au moins deux des structures de lignes droites suivantes ont la même longueur :

- la première structure de lignes droites,
- la deuxième structure de lignes droites,
- la troisième structure de lignes.

4. Procédé selon l'une quelconque des revendications 1 à 3,
   dans lequel la troisième structure de lignes a la même longueur que la première structure de lignes droites et que la deuxième structure de lignes droites.

5. Procédé selon l'une quelconque des revendications 1 à 4,

dans lequel la première largeur corrigée d'erreur $M_i$ et la deuxième largeur corrigée d'erreur $M_j$ sont utilisées pour la conception de la disposition d'un circuit électronique.

6. Procédé selon l'une quelconque des revendications 1 à 5,
dans lequel l'erreur du système de mesure de largeurs de ligne électrique par rapport à la largeur corrigée d'erreur est utilisée pour la conception de la topologie d'un circuit électronique.

7. Système d'étalonnage de mesure de largeurs de ligne électrique,
comprenant une unité de traitement qui est adaptée pour exécuter les étapes selon la revendication 1 pour une structure d'étalonnage avec

- une première structure de lignes droites composée d'un matériau de structure de lignes ayant une résistivité connue prédéterminée, la première structure de lignes ayant une première longueur connue et une épaisseur connue,
- une deuxième structure de lignes droites composée du matériau de structure de lignes, la deuxième structure de lignes droites ayant une deuxième longueur connue et la même épaisseur que la première structure de lignes droites,
- une troisième structure de lignes composée du matériau de structure de lignes et ayant la même épaisseur que la première structure de lignes droites, la troisième structure de lignes étant constituée d'au moins un premier composant ayant la même largeur que la première structure de lignes droites et d'au moins un deuxième composant ayant la même largeur que la deuxième structure de lignes droites, la troisième structure de lignes ayant une troisième longueur connue $L_{ij}$, le au moins un premier composant ayant une longueur de premier composant connue $L_i$ et le au moins un deuxième composant ayant une longueur de deuxième composant connue $L_j$.

8. Système d'étalonnage de mesure de largeurs de ligne électrique selon la revendication 7,
comprenant en outre une pastille comprenant la structure d'étalonnage.

# FIG 1A

# FIG 1B

# FIG 2

FIG 3C

312

FIG 3B

301

316

B2

311 312 313 314 315

310 (×24)

FIG 3A

300

301 (×20)

# FIG 4

FIG 5A

L₁

501

FIG 5B

L₂

502

FIG 5C

$L_3$

$L_{3a}=L/2$    $L_{3b}=L/2$

503    505

504

FIG 6A

L₁

601

FIG 6B

L₂

602

FIG 6C

$L_3$

$L_{3a}$    $L_{3b}$    $L_{3c}$

603    605

604    606

FIG 7A

705

701    702    704    703

700

FIG 7B

711                714

710

712                713

715

FIG 7C

721

722    720

FIG 7D

735

731    734    730

732

733

EP 1 278 997 B1

# FIG 8

# FIG 9

# FIG 10

$L_{bump}$

$L_{pinch}$

$2L_{pinch}$

$2L_{bump}$

# FIG 11A

# FIG 11B

# FIG 11C

▼    Bumped/pinched lines 180-50 nm

- - - -   Expected 180-50 nm

▲    Bumped/pinched lines 180-70 nm

———   Expected 180-70 nm

# FIG 12

◇  50nm min. width     ▫ 130nm min. width
▵  70nm min. width     ▪ 150nm min. width
▿ 100nm min. width     ○ deposited α - Si

FIG 13A

28° bends

Measured linewidth [nm]

◆ 100 nm

Number of bends

FIG 13B

45° bends

Measured linewidth [nm]

■ 70 nm
◆ 100 nm
— ● — 130 nm
— ▲ — 150 nm

Number of bends

FIG 13C

90° bends

Measured linewidth [nm]

■ 70 nm
◆ 100 nm
— ● — 130 nm
— ▲ — 150 nm

Number of bends

FIG 13D

Measured linewidth [nm]

■ 70 nm
— ● — 130 nm

Angle of bends

EP 1 278 997 B1

## FIG 14

y=0.93x+6.8
$R^2$=0.999, St. dev=2.5

y=0.89x-17.3
$R^2$=0.999, St. dev=2.0

□ KLA 70% derivative algorithm

● KLA 90% derivative algorithm

▲ Electrical CD
(amorphous deposited Si)

■ Electrical CD (poly Si)

EP 1 278 997 B1